# EUROPÄISCHE PATENTANMELDUNG

(11) **EP 1 780 088 A2**
(43) Veröffentlichungstag der Anmeldung: **02.05.2007**
(21) Anmeldenummer: 06022310.4
(22) Anmeldetag: 25.10.2006
(51) Int. Cl.: B60T 13/567

(54) **Anordnung und Verfahren zum Anbringen einer Bremskraftunterstützungseinrichtung in einem Kraftfahrzeug**

(30) Priorität: 27.10.2005 DE 102005051582
(71) Anmelder: Lucas Automotive GmbH, 56070 Koblenz (DE)
(72) Erfinder: Vela, Francisco Razquin, 31013 Berriozar Navarra (ES); Romero, Peio Ibarra, 31008 Pamplona Navarra (ES); Vitas, Pedro López, 31016 Mendillori-Pamplona, Navarra (ES); Casanova, Alberto Laspalas, 22005 Huesca (ES); Agos, Pablo Lecea, 31002 Pamplona, Navarra (ES); Echeverria, Alberto Petrina, 31100 Puente la Reina, Navarra (ES); Villamayor, Ernesto Bravo, 31012 Pamplona, Navarra (ES); Angulo, José Ángel Marina, 31014 Pamplona, Navarra (ES); Arraztoa, Juan Manuel Barberena, 31008 Pamplona, Navarra (ES); San Martin, Isabelle Larumbe, 31010 Barañáin (ES)
(74) Vertreter: Thum, Bernhard

(57) **Zusammenfassung**

Die Erfindung betrifft eine Anordnung zum Anbringen einer Bremskraftunterstützungseinrichtung (10) in einem Kraftfahrzeug mit wenigstens einem Befestigungsorgan (18, 20), das an einem Gehäuse (12) der Bremskraftunterstützungseinrichtung (10) angeordnet ist und von diesem vorspringt, wobei das wenigstens eine Befestigungsorgan (18, 20) mit einer Haltestruktur versehen ist, mittels der es an einem Fahrzeugchassis befestigbar ist. Desweiteren sieht die Erfindung vor, dass eine Adaptereinrichtung (22), die der Bremskraftunterstützungseinrichtung (10) zugewandt an dem Fahrzeugchassis befestigbar ist und die wenigstens eine Aufnahmeöffnung (34, 36) zur Aufnahme des wenigstens einen Befestigungsorgans (18, 20) aufweist, wobei der wenigstens einen Aufnahmeöffnung (34, 36) jeweils eine Komplementärhaltestruktur zugeordnet ist, die mit der Haltestruktur an dem wenigstens einen Befestigungsorgan (18, 20) zusammenwirkt.

## Beschreibung

Die vorliegende Erfindung betrifft eine Anordnung zum Anbringen einer Bremskraftunterstützungseinrichtung in einem Kraftfahrzeug mit wenigstens einem Befestigungsorgan, das an einem Gehäuse der Bremskraftunterstützungseinrichtung angeordnet ist und von diesem vorspringt, wobei das wenigstens eine Befestigungsorgan mit einer Haltestruktur versehen ist, mittels der es an einem Fahrzeugchassis befestigbar ist.

Aufgrund ständiger Bestrebungen, die Herstellungskosten von Kraftfahrzeugen zu reduzieren, wird neben einer Vereinfachung von konstruktiven Gestaltungen inzwischen auch der Forderung nach montagefreundlichen Lösungen Rechnung getragen. Dadurch kann der Personal- und Kostenaufwand bei der Kraftfahrzeugmontage reduziert werden. Insbesondere wird darauf geachtet, Montagearbeiten im Motorraum oder an anderen schwer zugänglichen Stellen des Kraftfahrzeugs erheblich zu erleichtern. Dies gilt sowohl für die Erstmontage als auch für später durchzuführende Reparatur- oder Wartungsmaßnahmen.

In diesem Zusammenhang sind aus dem Stand der Technik Anordnungen und Verfahren der eingangs bezeichneten Art bekannt. So zeigt beispielsweise der gattungsbildende Stand der Technik gemäß dem Dokument DE 38 04 850 A1 eine Anordnung, bei der ein Bremskraftverstärker über Rastmittel mit einer Spritzwand eines Kraftfahrzeugs ohne geringen Aufwand verrastet werden kann. Hierzu werden an der Spritzwand auf deren vom Motorraum abgewandten Seite Rasthülsen angebracht, die mit federnden Rastelementen versehen sind. In die Rasthülsen lassen sich korrespondierende Profilbolzen einschieben. Bei dieser Anordnung, die zwar die Montage erheblich erleichtert, ist es jedoch erforderlich, zunächst die Spritzwand entsprechend vorzubereiten, was insgesamt den Fertigungsaufwand und damit die Herstellungskosten erhöht. Ferner ist die Anordnung aus Rasthülsen und federnden Rastelementen hinsichtlich einer Wartung problematisch, weil zum Ausbau der Bremskraftunterstützungseinrichtung beidseits der Spritzwand Montageschritte durchzuführen sind.

Auch die Dokumente EP 0 262 006 A1 und DE 36 29 181 A1 zeigen Anordnungen, bei denen Bremskraftverstärker unter geringem Montageaufwand in einem Motorraum eines Fahrzeugs montiert werden können. Auch dieser Stand der Technik unterliegt jedoch dem Problem, dass jeweils die Spritzwand auf der vom Motorraum abgewandten Seite mit zusätzlichen Komponenten versehen werden muss, was den Fertigungsaufwand erheblich erhöht. Auch im Wartungsfall, bei dem beispielsweise der Bremskraftverstärker ausgebaut werden muss, sind Tätigkeiten beidseits der Spritzwand erforderlich, was die Handhabung einer solchen Anordnung umständlich macht.

Schließlich ist aus dem Dokument DE 42 31 787 A1 eine Anordnung aus dem Stand der Technik bekannt, bei der die Spritzwand selbst mit Profilausnehmungen zu versehen ist, was deren Herstellung erheblich verteuert. Ferner zeigt sich für den Wartungsfall das Problem, dass zum Ausbau des Bremskraftverstärkers beidseits der Spritzwand Montageschritte erforderlich sind.

Es ist demgegenüber eine Aufgabe der vorliegenden Erfindung, eine Anordnung und ein Verfahren zum Anbringen einer Bremskraftunterstützungseinrichtung in einem Kraftfahrzeug bereitzustellen, die bei einfacher und kostengünstiger konstruktiver Gestaltung eine vereinfachte Montage zulässt.

Diese Aufgabe wird durch eine Anordnung der eingangs bezeichneten Art gelöst, wobei eine Adaptereinrichtung vorgesehen ist, die der Bremskraftunterstützungseinrichtung zugewandt an dem Fahrzeugchassis befestigbar ist und die wenigstens eine Aufnahme zum Aufnehmen des wenigstens einen Befestigungsorgans aufweist, wobei der wenigstens einen Aufnahme jeweils eine Komplementärhaltestruktur zugeordnet ist, die mit der Haltestruktur an dem wenigstens einen Befestigungsorgan zusammenwirkt.

Erfindungsgemäß wird durch die Bereitstellung einer Adaptereinrichtung eine Schnittstelle eingesetzt, die vor Einbau der Spritzwand in das Fahrzeug bereits an dieser angebracht werden kann und zusammen mit dieser eine Baugruppe bildet. Die Adaptereinrichtung weist sämtliche Vorkehrungen auf, die zur Anbringung der Bremskraftunterstützungseinrichtung erforderlich sind. Es ist also erfindungsgemäß nicht nötig, vorab aufwändige Fertigungsarbeiten an der Spritzwand durchzuführen. Vielmehr können ohnehin an einer herkömmlichen Spritzwand vorgesehene Befestigungsöffnungen zum Anbringen der Adaptereinrichtung genutzt werden. Im Rahmen der weiteren Fahrzeugmontage müssen dann lediglich Tätigkeiten im Motorraum, d. h. auf der im Motorraum zugewandten Seite der Spritzwand, durchgeführt werden. Dies gilt gleichermaßen für die Erstmontage des Kraftfahrzeugs wie für später durchzuführende Wartungsschritte. Durch die Erfindung lässt sich somit einerseits der Fertigungsaufwand der einzelnen Komponenten in Grenzen halten, da insbesondere keine besonderen Fertigungsmaßnahmen an der Spritzwand durchgeführt werden müssen, andererseits wird die Montage erheblich erleichtert.

Wenn im Rahmen dieser Erfindungsbeschreibung von einer "Bremskraftunterstützungseinrichtung" die Rede ist, so soll dieser Begriff Fälle umfassen, bei denen ein reiner Bremskrafterzeuger in dem Kraftfahrzeug montiert wird, d. h. eine Anordnung, bei der die vom Fahrer auf das Bremspedal ausgeübte Bremskraft weitgehend verloren geht und die auf einen Hauptbremszylinder ausgeübte Bremskraft "synthetisch", beispielsweise über eine elektromagnetische Anordnung, erzeugt wird. Gleichermaßen soll der Begriff "Bremskraftunterstützungseinrichtung" aber auch herkömmliche Bremskraftverstärker umfassen, bei denen die von dem Fahrer auf das Bremspedal ausgeübte Bremskraft zur eigentlichen Bremskrafterzeugung im Hauptbremszylinder ausgenützt und gegebenenfalls noch verstärkt wird.

Eine Weiterbildung der Erfindung sieht vor, dass die Adaptereinrichtung mit Befestigungsbohrungen zur motorraumseitigen Anbringung an einer Spritzwand des Kraftfahrzeugs ausgebildet ist.

Ferner kann erfindungsgemäß vorgesehen sein, dass die Adaptereinrichtung einen Aufnahmekanal zum Aufnehmen eines Betätigungseingangsabschnitts der Bremskraftunterstützungseinrichtung aufweist. Dadurch ist ein sicheres und spielfreies Aufnehmen der Bremskraftunterstützungseinrichtung möglich. Gemäß einer Weiterbildung der Erfindung kann aber auch vorgesehen sein, dass die Aufnahme zum Aufnehmen eines der Befestigungsorgane und der Aufnahmekanal zusammenfallen, wobei die Komplementärhaltestruktur um den Aufnahmekanal herum ausgebildet ist.

Gemäß einer Erfindungsvariante ist vorgesehen, dass das wenigstens eine Befestigungsorgan von einem Profilbolzen gebildet ist, der an seinem freien Ende mit einer die Haltestruktur bildenden Durchmesserverengung versehen ist, wobei die Adaptereinrichtung mit jeweils einer in der Aufnahme angebrachten und in die Durchmesserverengung eingreifenden Rastfeder versehen ist. Ferner kann in diesem Zusammenhang vorgesehen sein, dass die Rastfeder in der dieser zugeordneten Aufnahme gegen eine Axialbewegung blockiert ist. Beispielsweise kann die Rastfeder mit einem Fixierring an einem ihrer axialen Enden versehen sein, der an einem Anschlag in dem Adapterelement anliegt und darin fixiert ist.

Um die Montage weiter zu erleichtern, sieht eine Weiterbildung der Erfindung im Rahmen der vorstehend geschilderten Erfindungsvariante vor, dass der Profilbolzen mit einem Einführzapfen oder/und mit einer Spreizrampe versehen ist. Der Einführzapfen ermöglicht ein leichtes Einführen des Profilbolzens in die Rastfeder. Beim weiteren Einschieben des Profilbolzens wird die Rastfeder dann aufgespreizt, bis sie schließlich in die Durchmesserverengung einschnappt und diese hintergreift.

Um ein spielfreies Anliegen von Adaptereinrichtung und Bremskraftunterstützungseinrichtung gewährleisten zu können, ist ein, vorzugsweise elastisches, Pufferelement vorgesehen, das zwischen der Adaptereinrichtung und der Bremskraftunterstützungseinrichtung angeordnet ist. Dabei kann es sich beispielsweise um eine elastische Gummimatte handeln.

Eine alternative Erfindungsvariante sieht vor, dass das wenigstens eine Befestigungsorgan von einem Kopfbolzen gebildet ist, der an seinem freien Ende mit einem die Haltestruktur bildenden durchmesservergrößerten Rastkopf versehen ist, wobei die jeweils zugeordnete Aufnahme der Adaptereinrichtung in Form einer Bajonettnut zum Aufnehmen und Verriegeln jeweils eines Kopfbolzens ausgebildet ist. Der Kopfbolzen kann beispielsweise ein T-Profil oder Pilzprofil aufweisen.

In Weiterbildung des Bajonett-Verschlusses ist im Rahmen dieser Erfindungsvariante ferner vorgesehen, dass die Bajonettnut zur Fixierung der Bremskraftunterstützungseinrichtung jeweils eine mit dem Kopfbolzen zusammenwirkende Rampenfläche aufweist, auf welche der Kopfbolzen beim Anbringen der Bremskraftunterstützungseinrichtung an der Adaptereinrichtung aufläuft. Dabei wirkt die Rampenfläche als Anzugsschräge, so dass Bremskraftunterstützungseinrichtung und Adaptereinrichtung miteinander verspannt werden. In diesem Zusammenhang sei nochmals auf die Möglichkeit der Anbringung einer spielreduzierenden Gummimatte oder dergleichen zwischen Bremskraftunterstützungseinrichtung und Adaptereinrichtung verwiesen.

Um eine eindeutige Montageposition bereitzustellen, sieht die Erfindung in einer Weiterbildung eine Anschlagfläche an der Bajonettnut vor, welche eine vordefinierte Relativposition zwischen Bremskraftunterstützungseinrichtung und Adaptereinrichtung bereitstellt. Beispielsweise kann im Bereich dieser vordefinierten Relativposition die Rampenfläche in eine Plateaufläche übergehen, so dass während der Montage ein Monteur anhand einer Veränderung der spürbaren Gegenkräfte eine Art taktile Rückmeldung für das Erreichen der angestrebten Montageposition bekommt.

Eine Weiterbildung der Erfindung sieht vor, dass das Befestigungsorgan als Schaftabschnitt ausgebildet ist, der von der Bremskraftunterstützungseinrichtung vorspringt, und dass die Adaptereinrichtung einen korrespondierende Gegenschaftabschnitt aufweist, der mit dem Schaftabschnitt koppelbar ist. Dabei ist es einerseits möglich, dass der Schaftabschnitt in den Gegenschaftabschnitt einsteckbar ist, wobei der Schaftabschnitt an seiner Außenumfangsfläche die Haltestruktur, insbesondere eine Bajonettverriegelungsformation, aufweist, und dass der Gegenschaftabschnitt an seiner Innenumfangsfläche die Komplementärhaltestruktur, insbesondere eine Komplementär-Bajonettverriegelungsformation, aufweist. Alternativ hierzu ist es aber auch möglich, dass der Gegenschaftabschnitt in den Schaftabschnitt einsteckbar ist, wobei der Gegenschaftabschnitt an seiner Außenumfangsfläche die Haltestruktur, insbesondere eine Bajonettverriegelungsformation, aufweist, und dass der Schaftabschnitt an seiner Innenumfangsfläche die Komplementärhaltestruktur, insbesondere eine Komplementär-Bajonettverriegelungsformation, aufweist. Um auch den Aufbau der Bremskraftunterstützungseinrichtung lediglich in geringem Umfang ändern zu müssen, sieht eine Weiterbildung der Erfindung vor, dass das Befestigungsorgan, insbesondere der Schaftabschnitt, an einem Koppelelement ausgebildet ist, das als gesondertes Bauteil oder als Baugruppe an der Bremskraftunterstützungseinrichtung anbringbar ist. So ist es möglich, sowohl das Koppelemente als auch die Adaptereinrichtung speziell für den jeweiligen Einsatzfall und die jeweilige Einbausituation auszubilden und dann an dem Fahrzeugchassis bzw. an der Bremskraftunterstützungseinrichtung anzubringen.

An sich reicht die durch die Rampenflächen erzielte Spannwirkung zur Fixierung der Bremskraftunterstützungseinrichtung an der Adaptereinrichtung aus. Um eine solche Fixierung noch zuverlässiger zu gestalten, kann erfindungsgemäß vorgesehen sein, dass an wenigstens einer Komponente von Adaptereinrichtung und Bremskraftunterstützungseinrichtung ein Fixierelement zum Festlegen der Bremskraftunterstützungseinrichtung an der Adaptereinrichtung in der vordefinierten Relativposition vorgesehen ist. Bei einem Ausführungsbeispiel ist es dabei möglich, dass das Fixierelement von einer Fixierschraube oder von einem Fixierstift gebildet ist. Alternativ hierzu kann aber auch vorgesehen sein, dass das Fixierelement von einer reibungsintensiven Fläche gebildet ist, die mit einer korrespondierenden Gegenfläche an der jeweils anderen Komponente von Adaptereinrichtung und Bremskraftunterstützungseinrichtung zusammenwirkt. Die beiden reibungsmäßig zusammenwirkenden Flächen werden bei der Montage in gegenseitigen Eingriff gebracht und halten die Bremskraftunterstützungseinrichtung und die Adaptereinrichtung bei Erreichen der Montageposition fest zusammen. Bei einer Demontage zur Wartungszwecken müssen dann die erhöhten Haftreibungskräfte überwunden werden.

Eine besonders zuverlässiger Zusammenhalt bei unverändert einfacher Montage ergibt sich dann, wenn das Fixierelement eine Lamellenformation aufweist, die mit einer Mehrzahl von Blockierlamellen versehen ist, welche in einer Blockierrichtung mit einem Anstellwinkel geneigt ausgerichtet sind. Bei einer derartigen Ausführungsvariante der Erfindung lassen sich die Blockierlamellen in der Montagerichtung einfacher auslenken (flachdrücken) als in der Blockierrichtung. Vorzugsweise wirkt die Lamellenformation mit einer korrespondierenden Rastzahnformation an der jeweils anderen Komponente zusammen.

Die Erfindung betrifft ferner ein Verfahren zum Anbringen einer Bremskraftunterstützungseinrichtung in einem Kraftfahrzeug, mit einer Anordnung der vorstehend beschriebenen Art, umfassend die Schritte:
A) motorraumseitiges Anbringen der Adaptereinrichtung an dem Fahrzeugchassis,
B) Einführen des wenigstens einen Befestigungsorgans in die diesem zugeordnete Aufnahmeöffnung an der Adaptereinrichtung und
C) Fixieren der Bremskraftunterstützungseinrichtung an der Adaptereinrichtung durch In-Eingriff-bringen der Haltestruktur und der Komplementärhaltestruktur.

Im Folgenden werden verschiedene Ausführungsformen der Erfindung anhand der beiliegenden Figuren beispielhaft erläutert. Es stellen dar:
- Fig. 1: eine perspektivische Ansicht eines erfindungsgemäß ausgebildeten Bremskraftverstärkers gemäß einem ersten Ausführungsbeispiel;
- Fig. 2: eine Längsschnittansicht durch eine erfindungsgemäße Adaptereinrichtung gemäß einem zweiten Ausführungsbeispiel;
- Fig. 3: eine geschnittene Detailansicht zur Erläuterung der Montagestellung von Bremskraftverstärker und Adaptereinrichtung gemäß Figuren 1 und 2;
- Fig. 4: eine Ansicht eines zweiten Ausführungsbeispiels eines erfindungsgemäß ausgebildeten Bremskraftverstärkers;
- Fig. 5: eine perspektivische Ansicht einer erfindungsgemäßen Adaptereinrichtung gemäß dem zweiten Ausführungsbeispiel;
- Fig. 6 bis 8: Detail-Ansichten zur Erläuterung der Wirkungsweise des zweiten Ausführungsbeispiels;
- Fig. 9: eine Ansicht entsprechend Fig. 5 einer leicht abgewandelten Ausführungsform der Adaptereinrichtung;
- Fig. 10: eine Ansicht entsprechend Fig. 5 einer nochmals leicht abgewandelten Ausführungsform der Adaptereinrichtung;
- Fig. 11 und 12: Detailansichten zu einer weiteren erfindungsgemäßen Ausführungsform;
- Fig. 13: eine perspektivische Ansicht eines Koppelelements zur nachträglichen Anbringung an einem Bremskraftverstärker;
- Fig. 14: eine zu dem Koppelelement nach Fig. 13 passende Adaptereinrichtung zur Anbringung an dem Fahrzeugchassis;
- Fig.15: eine alternative Ausführungsform eines Koppelelements und
- Fig.16: eine an das Koppelelement gemäß Fig.15 angepasste alternative Ausführungsform der Adaptereinrichtung.

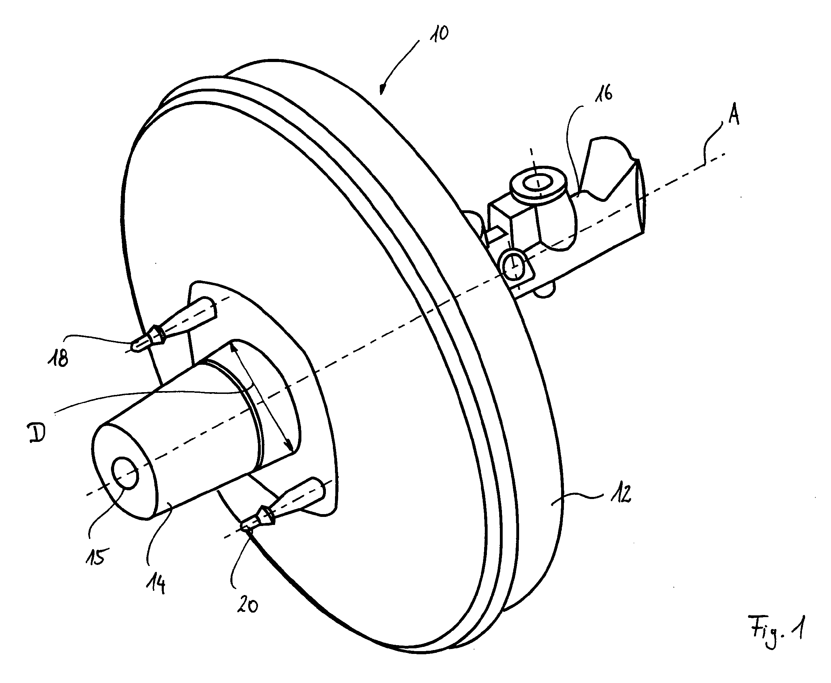

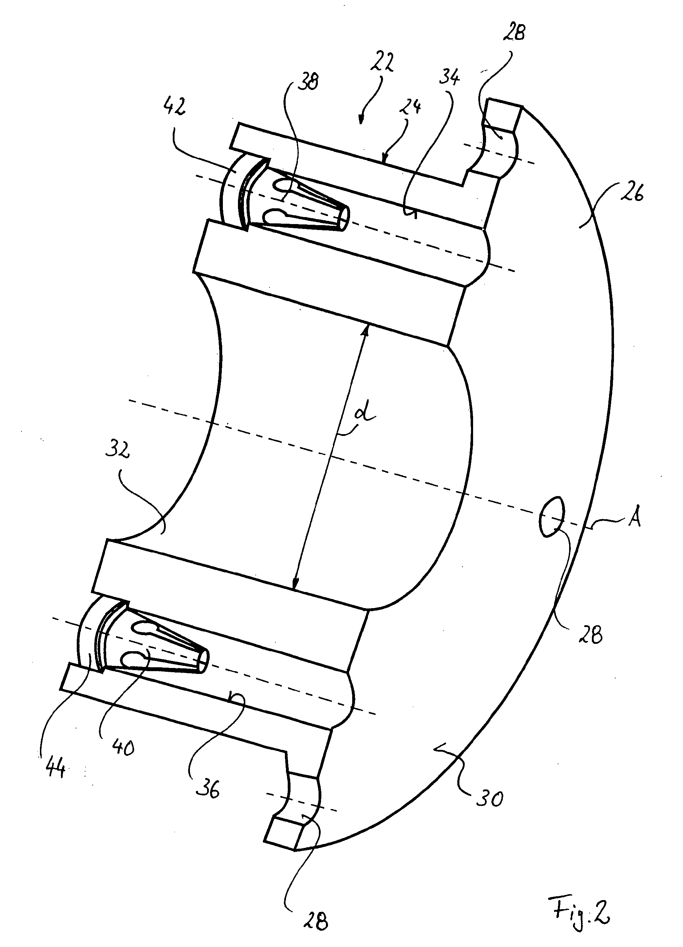

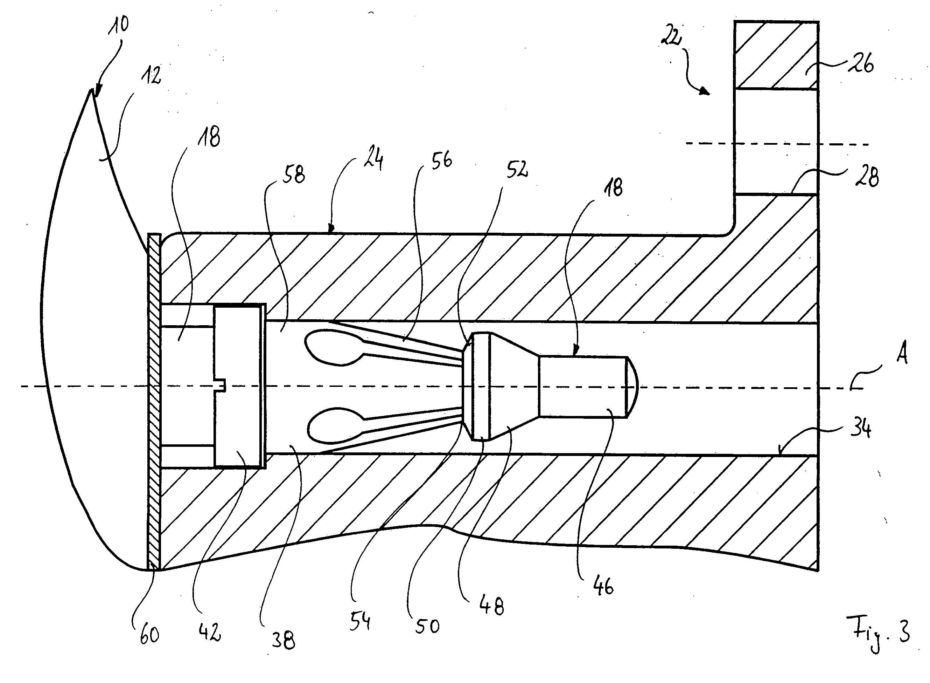

In Fig. 1 ist ein erfindungsgemäß gestalteter Bremskraftverstärker allgemein mit 10 bezeichnet. Dieser umfasst ein Gehäuse 12 und einen Betätigungseingang 14, der sich entlang einer Längsachse A ausgehend von dem Gehäuse 12 aus erstreckt und der mit einer Öffnung 15 versehen ist, in die im montierten Zustand ein mit einem Bremspedal gekoppeltes Krafteingangsglied eingeführt ist. Ferner ist an das Gehäuse 12 noch ein Hauptbremszylinder 16 angeschlossen, der mit einem nicht gezeigten Hydrauliksystem zur Erzeugung eines hydraulischen Bremsdrucks an ebenfalls nicht gezeigten Radbremseinheiten gekoppelt ist. In Fig. 1 erkennt man ferner, dass sich ausgehend von dem Gehäuse 12 zwei Profilbolzen 18 und 20 parallel zur Längsachse A erstrecken. Diese Profilbolzen 18 und 20 sind Verlängerungen der ohnehin in dem Bremskraftverstärker vorgesehenen und diesen durchsetzenden Zugbolzen. Sie dienen der einfachen und schnellen Montage des Bremskrafterzeugers 10 in einem Motorraum eines Fahrzeugs.

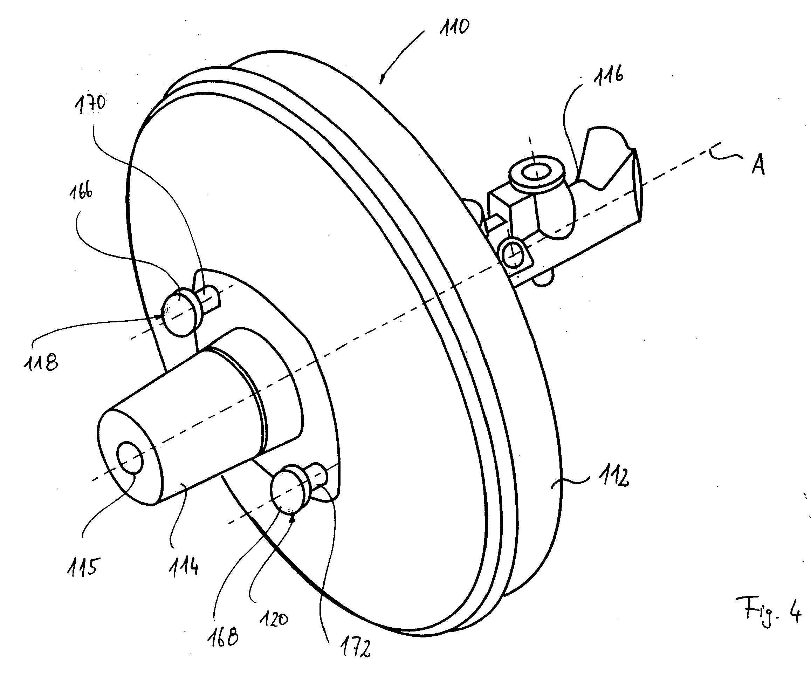

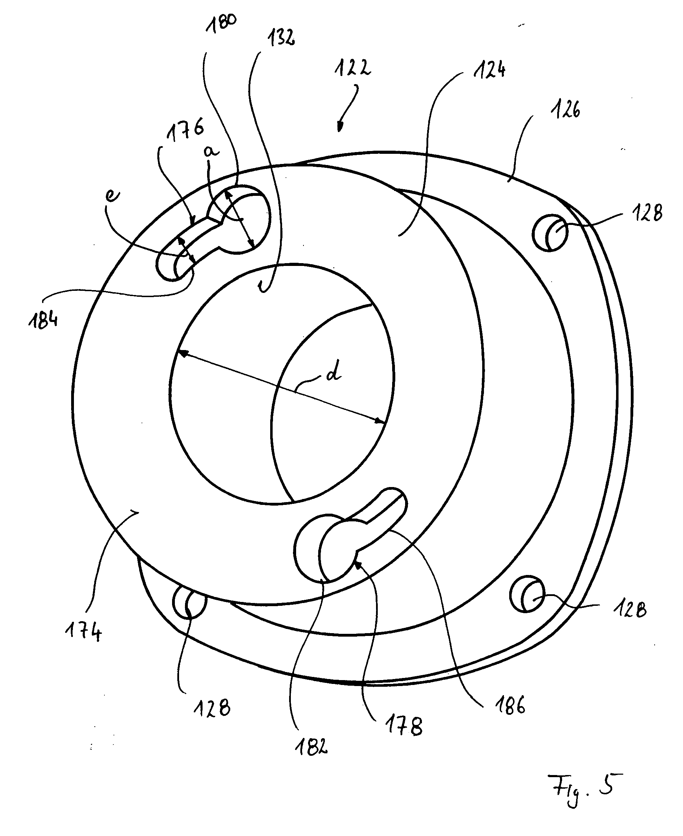

Hierzu dient neben den Profilbolzen 18 und 20 auch eine Adaptereinrichtung, die in Fig. 2 gezeigt und dort allgemein mit 22 bezeichnet ist. Die Adaptereinrichtung 22 weist einen kreiszylindrischen Grundkörper 24 und einen daran anschließenden Flansch 26 auf. In den Flansch 26 sind mehrere Befestigungsbohrungen 28 eingebracht, die zur Befestigung der Adaptereinrichtung 22 an einer nicht gezeigten Spritzwand eines Kraftfahrzeugs dienen. Genauer gesagt wird der Flansch 26 mit seiner Stirnfläche 30 an die nicht gezeigte Spritzwand angeflanscht. Der Grundkörper 24 weist eine zentrale Öffnung 32 auf, die sich ebenfalls in Richtung der Längsachse A erstreckt. Der Innendurchmesser d dieser zentralen Öffnung 32 ist auf den Außendurchmesser D des Betätigungseingangs 14 abgestimmt.

Ferner sind in dem Grundkörper 24 zwei Axialbohrungen 34 und 36 eingebracht, welche nahe dem freien Ende des Grundkörpers 24 mit einer Durchmesserstufe ausgebildet sind. In diesen Axialbohrungen 34 und 36 sind Rastfedern 38 und 40 eingesetzt. Die Rastfedern 38 und 40 weisen jeweils einen Befestigungsring 42 und 44 auf, mit dem sie an der Durchmesserstufe der Axialbohrungen 34 und 36 anliegen und in den Axialbohrungen 34 und 36, beispielsweise durch Einpressen oder Einschrumpfen, festgelegt sind.

Zur Montage des Bremskraftverstärkers 10 in dem Motorraum eines Fahrzeugs wird zunächst die Adaptereinrichtung 22 an der Spritzwand in der oben beschriebenen Weise fest geschraubt. Dies geschieht bevorzugt vor Einbau der Spritzwand, so dass die Spritzwand zusammen mit der Adaptereinrichtung 22 als Baugruppe in das Fahrzeug montiert wird. Sodann wird der Bremskraftverstärker 10 an der Adaptereinrichtung 22 angebracht, indem der Betätigungseingang 14 in die zentrale Öffnung 32 der Adaptereinrichtung 22 eingeschoben wird. Die Positionierung der Profilbolzen 18 und 20 an dem Bremskraftverstärker 10 stimmt mit der Positionierung der Axialbohrungen 34 und 36 überein, so dass die Profilbolzen 18 und 20 beim Einschieben des Betätigungseingangs 14 in die zentrale Öffnung 32 der Adaptereinrichtung 22 in die Axialbohrungen 34 und 36 eindringen.

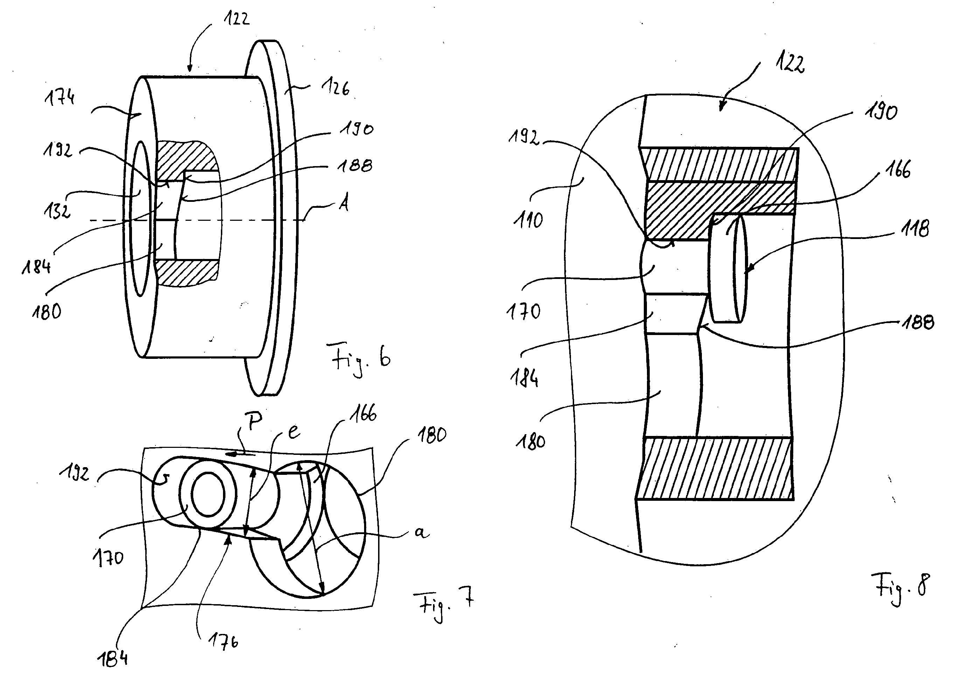

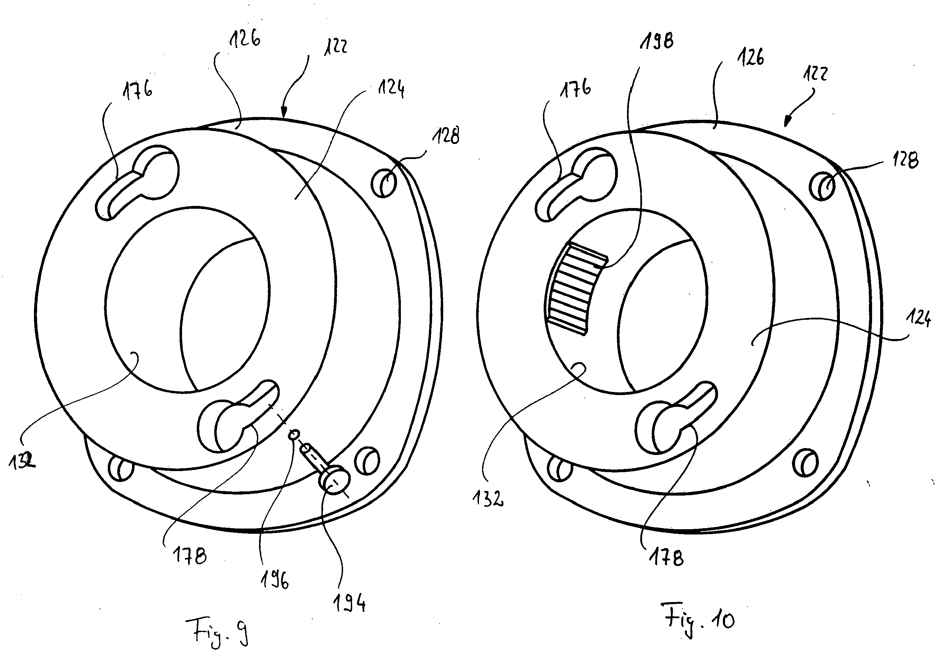

Man erkennt den bereits montierten Zustand in der Detailansicht gemäß Figur 3. Die Profilbolzen 18 und 20 weisen an ihrem vorderen Ende einen Einführzapfen 46 auf. An diesen schließt sich in axialer Richtung ein konischer Rampenabschnitt 48 an, der in einen kreiszylindrischen Abschnitt 50 übergeht. An den kreiszylindrischen Abschnitt 50 schließt sich wieder ein steil abfallender konischer Abschnitt 52 an, der zu einer Durchmesserverengung 54, d. h. zu einer Hinterschneidung, führt. Die Rastfedern 38 und 40 weisen konisch zulaufende Federarme 56 auf, die sich von einem Federkragen 58 aus in axialer Richtung in die in Fig. 2 gezeigte Stellung vorgespannt erstrecken.

Während die Profilbolzen 18 und 20 im Rahmen der Montage in die Axialbohrungen 34 und 36 eingeschoben werden, dringt zunächst der Einführzapfen 46 durch den Befestigungsring 42 bzw. 44 in das Innere der jeweiligen Rastfeder 38 und 40 ein. Sobald die Innenseite der Federarme 56 in Kontakt mit dem konischen Abschnitt 48 kommt, werden die Federarme 56 aufgespreizt. Schließlich gleiten die freien Enden der aufgespreizten Federarme 56 über den kreiszylindrischen Abschnitt 50 hinweg und Schnappen in die Hinterschneidung 54 ein. Dadurch wird das Gehäuse 12 an die Adaptereinrichtung 22 angezogen und mit dieser fest verspannt. Es sei angemerkt, dass zwischen Gehäuse 12 und Adaptereinrichtung 22 an deren einander zugewandten Flächen eine Gummimatte 60 eingelegt ist, die das Gehäuse 12 und die Adaptereinrichtung 22 in gegenseitiger satter Anlage hält.

Durch die in Fig. 1 bis 3 gezeigte Anordnung lässt sich unter geringem konstruktivem Aufwand eine stark vereinfachte Montage des Bremskraftverstärkers 10 an der mit der Adaptereinrichtung 22 ausgebildeten Spritzwand des Fahrzeugs erreichen.

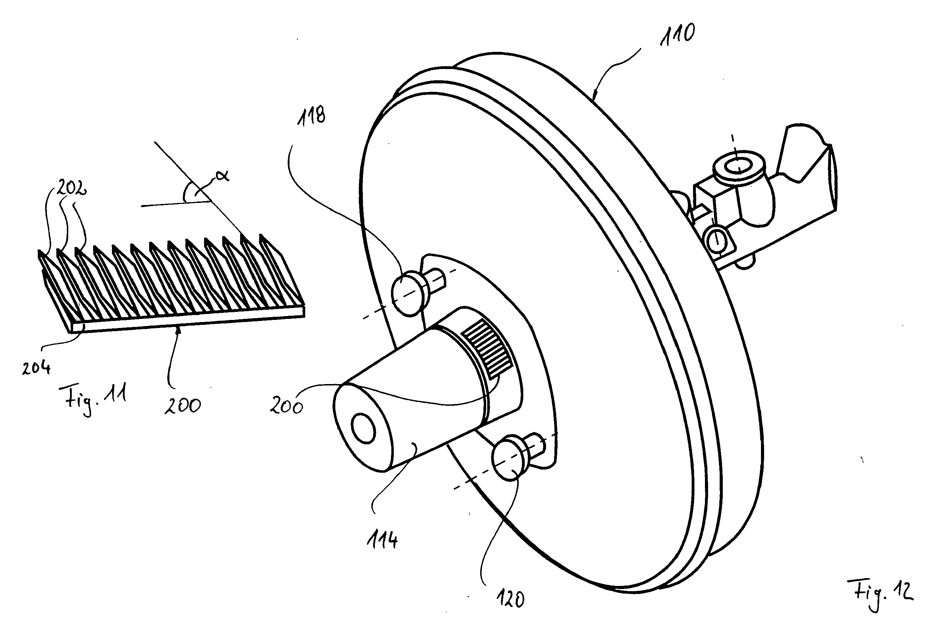

Figuren 4 bis 7 zeigen ein zweites Ausführungsbeispiel der erfindungsgemäßen Anordnung. Zur Vereinfachung der Beschreibung und zur Vermeidung von Wiederholungen werden für gleichartige oder gleichwirkende Komponenten dieselben Bezugszeichen verwendet, wie bei der Beschreibung von Figuren 1 bis 3, jedoch mit der Ziffer "1" vorangestellt.

In Fig. 4 erkennt man einen Bremskraftverstärker 110, der im Wesentlichen dem Bremskraftverstärker 10 aus Fig. 1 entspricht. Statt der Profilbolzen 18 und 20 weist der Bremskraftverstärker 110 jedoch Kopfbolzen 118 und 120 auf. Diese umfassen einen Rastkopf 166 und 168 sowie einen Schaft 170 und 172, wobei der Durchmesser des Rastkopfes 166 und 168 erheblich größer ist als der Durchmesser des Schafts 170 und 172.

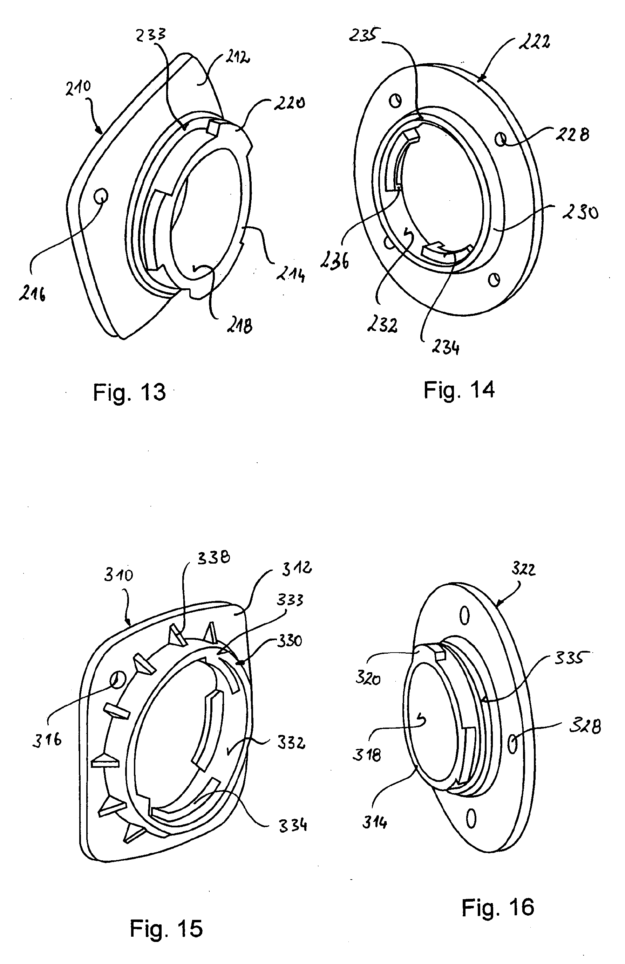

Auch die Adaptereinrichtung 122 gemäß Figur 5 unterscheidet sich geringfügig von der Adaptereinrichtung 22 gemäß Figur 2. Zur Aufnahme der Kopfbolzen 118 und 120 sind in die Stirnfläche 174 der Adaptereinrichtung 122 Bajonettnuten 176 und 178 eingebracht. Die Bajonettnuten 176 und 178 weisen eine Aufnahmeöffnung 180 und 182 auf, deren Durchmesser a geringfügig größer ist als der Außendurchmesser der Rastköpfe 166 und 168 der Kopfbolzen 118 und 120. Ferner weisen die Bajonettnuten 176 und 178 jeweils einen Verriegelungsschacht 184 und 186 auf, der in die Aufnahmeöffnung 180 und 182 mündet und der eine lichte Weite e aufweist, die geringfügig größer ist als der Außendurchmesser des Schafts 170 und 172.

In den Figuren 6 bis 8 sind Einzelheiten der Kopplung von Bremskraftverstärker 110 und Adaptereinrichtung 122 gemäß dem zweiten Ausführungsbeispiel der Erfindung zu erkennen. Figur 6 zeigt, dass der Verriegelungsschacht 184 (und ebenso der Verriegelungsschacht 186) auf seiner von der Stirnfläche 174 abgewandten Rückseite mit einer Rampenfläche 188 versehen ist, an die sich eine Plateaufläche 190 anschließt. Ferner erkennt man in Figuren 6 und 7, dass die Bajonettnuten 176 und 178 durch eine Anschlagfläche 192 begrenzt sind.

Zur Montage des Bremskraftverstärkers 110 an der an einer Spritzwand des Kraftfahrzeugs angebrachten Adaptereinrichtung 122 wird zunächst der Betätigungseingang 114 in die zentrale Öffnung 132 eingeführt. Sodann werden die Kopfbolzen 118 und 120 mit ihren Rastköpfe 166 und 168 in die korrespondierenden Aufnahmeöffnungen 180 und 182 eingeführt, bis die Köpfe 166 und 168 vollständig durch diese hindurch getreten sind. Im Zuge der Montage wird dann der Bremskraftverstärker relativ zu der Adaptereinrichtung 122 entsprechend Pfeil P verdreht. Dabei gelangen die Rastköpfe 166 und 168 in Eingriff mit der Rampenfläche 188 und gleiten an dieser hoch, bis sie auf der Plateaufläche 190 aufliegen. Schließlich kommt der Schaft 170 bzw. 172 in Anlage mit der Anschlagfläche 192.

Die beiden Komponenten Bremskraftverstärker 110 und Adaptereinrichtung 122 können somit auf einfache Weise im Stile eines Bajonettverschlusses aneinander befestigt und miteinander verspannt werden. Ein Trennen dieser beiden Komponenten erfolgt einfach durch zu dem Pfeil P entgegengerichtetes Verdrehen.

Fig. 9 zeigt ausgehend von der Darstellung gemäß Figur 5 eine Weiterentwicklung der Erfindung. Obgleich durch die Spannwirkung der Rampenfläche 188 bereits ein fester Zusammenhalt von Bremskraftverstärker 110 und Adaptereinrichtung 122 erreicht wird, ist in Fig. 9 zusätzlich die Möglichkeit zur Anbringung einer Fixierschraube 194 gezeigt, die in eine korrespondierende Gewindebohrung 196 eingeschraubt wird. In ihrer eingeschraubten Stellung verhindert die Fixierschraube 194 eine Relativbewegung zwischen dem Bremskraftverstärker 110 und der Adaptereinrichtung 122, indem sie den in der Bajonettnut 178 aufgenommenen Kopfbolzen festlegt.

Figur 10 zeigt ausgehend von der Darstellung gemäß Figur 5 die Möglichkeit, dass an der Innenumfangsfläche der zentralen Öffnung 132 ein Reibelement 198 angebracht ist. Dieses wirkt mit der Außenumfangsfläche des Betätigungseingangs 114 unter Erhöhung der Gleitreibung und insbesondere der Haftreibung im montierten Zustand zusammen. Bei dem Reibelement 198 kann es sich beispielsweise um eine Gummimatte handeln.

Alternativ hierzu ist es erfindungsgemäß auch möglich, wie in Figuren 11 und 12 gezeigt, an der Außenumfangsfläche des Betätigungseingangs 114 ein Fixierelement in Form einer Lamellenformation 200 anzubringen. Die Lamellenformation 200 ist vergrößert in Figur 11 dargestellt. Sie umfasst eine Reihe von Lamellen 202, die in einem Anstellwinkel α relativ zu einer Basis 204 ausgerichtet sind. Die Lamellen 202 lassen sich unter verhältnismäßig geringem Kraftaufwand niederdrücken, wobei der Anstellwinkel verkleinert wird. Hingegen erfordert ein Aufrichten der Lamellen 202, insbesondere wegen des dabei erforderlichen Platzbedarfs einen relativ hohen Kraftaufwand. Die Lamellenformation 200 wirkt vorzugsweise mit einem korrespondierenden, an der Innenumfangsfläche der zentralen Öffnung 132 angeordneten Rastelement zusammen, welches eine der Lamellenformation entsprechenden Rastzahnanordnung aufweist. Während der Montage von Bremskraftverstärker 110 und den Adaptereinrichtung 122 wird die Lamellenformation 200 in Eingriff mit der Rastzahnanordnung gebracht, wobei die Lamellenformation 200 so ausgerichtet ist, dass dieses In-Eingriff-Bringen unter geringem Kraftaufwand erfolgt. Zum Lösen von Bremskraftverstärker 110 und Adaptereinrichtung 122 muss jedoch die Lamellenformation 200 unter Überwindung relativ hoher Gegenkräfte außer Eingriff mit der Rastzahnanordnung gebracht werden. Ein unbeabsichtigtes Lösen von Bremskraftverstärker 110 und Adaptereinrichtung 122 kann somit verhindert werden.

Figuren 13 und 14 zeigen eine weitere erfindungsgemäße Alternative einer Anordnung zum Anbringen eines Bremskraftverstärkers an einem Fahrzeugchassis. Hierzu ist ein Koppelelement 210 vorgesehen, das eine Basisplatte 212 aufweist, von der ausgehend sich ein Schaftabschnitt 214 erstreckt. Die Basisplatte 212 weist Befestigungsbohrungen 216 auf. Der Schaftabschnitt 214 ist mit einem zentralen Durchbruch 218 versehen. An seinem Außenumfang ist der Schaftabschnitt 214 mit radialen Zungen 220 ausgebildet.

Die Adaptereinrichtung 222 gemäß Figur14 weist ebenfalls Befestigungsbohrungen 228 auf. Darüber hinaus weist die Adapatereinrichtung 222 einen ringförmigen Ansatz 230 auf, der ebenfalls eine zentrale Öffnung 232 besitzt. An der Innenumfangsfläche der zentralen Öffnung sind radiale Bajonett-Verriegelungsformationen 234 vorgesehen.

Wie vorstehend bereits beschrieben, wird zunächst die Adaptereinrichtung 222 an dem Fahrzeugchassis, beispielsweise an einer Spritzwand des Fahrzeugs angebracht. Ferner wird das Koppelelement 210 nachträglich an dem Bremskraftverstärker angebracht. Hierzu dienen jeweils die Befestigungsbohrungen 216 bzw. 228. Sodann kann der Schaftabschnitt 214 derart in die zentrale Öffnung 232 eingeschoben werden, dass die Zungen 220 zwischen die Bajonett-Verriegelungsformationen 234 eingreifen. Im Rahmen der weiteren Montage wird der Bremskraftverstärker samt dem Koppelement 210 derart relativ zu der an dem Fahrzeugchassis festgelegten Adaptereinrichtung 222 verdreht, dass die radialen Zungen 220 in Eingriff mit den Bajonett-Verriegelungsformationen 234 gelangen und so der mit dem Koppelelement 210 versehene Bremskraftverstärker über die Adaptereinrichtung 222 an dem Fahrzeugchassis gehalten wird.

Es sei darauf hingewiesen, dass die Bajonett-Verriegelungsformationen 234 mit Hinterschneidungsflächen 236 versehen sind, die eine sichere Verriegelung von Koppelement 210 und Adaptereinrichtung 222 ermöglichen. Ferner definieren die Bajonett-Verriegelungsformationen 234 auch einen bestimmten Anschlag, so dass die Relatiwerdrehung nur in eine vorbestimmte Winkellage erfolgen kann.

Figuren 15 und 16 zeigen eine zu dem Ausführungsbeispiel gemäß Figuren 13 und 14 alternative Ausführungsform. Man erkennt, dass das Koppelelement 310 und die Adaptereinrichtung 322 derart ausgebildet sind, dass nunmehr ein Schaftabschnitt 314 mit radialen Zungen 320 an der Adaptereinrichtung 322 angebracht ist. Hingegen ist ein Aufnahmering 330 an dem Koppelement 310 angebracht. Der Aufnahmering 330 ist über Befestigungsrippen 338 fest mit der Basisplatte 312 verbunden. Auch der Ringansatz 330 weist an seiner Innenumfangsfläche 332 Bajonett-Verriegelungsformationen 334 auf, die mit den radialen Zungen 320 bei der Montage in Eingriff gebracht werden können, um die Adaptereinrichtung 322 mit dem Koppelelement 310 in der vorstehend mit Bezug auf Figuren 13 und 14 beschriebenen analogen Weise zu verriegeln.

Es versteht sich, dass im montierten Zustand der Betätigungseingang 14 bzw. 114 des Bremskraftverstärkers durch die zentrale Öffnung 218 bzw. 318 von Koppelelement bzw. Adaptereinrichtung hindurch verläuft, wie dies vorstehend auch bereits mit Bezug auf Figuren 1 bis 12 beschrieben wurde. Ferner sei darauf verwiesen, dass im montierten Zustand jeweils Stirnflächen 233 und 235 bzw. 333 und 335 in gegenseitiger Anlage stehen und so eine definierte Montageposition des Bremskraftverstärkers relativ zu dem Fahrzeugchassis in axialer Richtung des Bremskraftverstärkers festlegen.

Die vorstehend beschriebenen Ausführungsbeispiele der Erfindung zeigen, dass ein verhältnismäßig schneller und einfacher Montagevorgang des Bremskraftverstärkers an der bereits an der Spitzwand angebrachten Adaptereinrichtung möglich ist, wobei allein Montageschritte im Motorraum, d. h. auf der Motorraumseite der Spritzwand erforderlich sind. Gleiches gilt auch für den Ausbau des Bremskraftverstärkers im Wartungsfall.

## Patentansprüche

1. Anordnung zum Anbringen einer Bremskraftunterstützungseinrichtung (10; 110) in einem Kraftfahrzeug mit wenigstens einem Befestigungsorgan (18, 20; 118, 120), das an einem Gehäuse (12; 122) der Bremskraftunterstützungseinrichtung (10; 110) angeordnet ist und von diesem vorspringt, wobei das wenigstens eine Befestigungsorgan (18, 20; 118, 120) mit einer Haltestruktur versehen ist, mittels der es an einem Fahrzeugchassis befestigbar ist,
**gekennzeichnet durch** eine Adaptereinrichtung (22; 122), die der Bremskraftunterstützungseinrichtung (10; 110) zugewandt an dem Fahrzeugchassis befestigbar ist und die wenigstens eine Aufnahme (34, 36; 184, 186) zum Aufnehmen des wenigstens einen Befestigungsorgans (18, 20; 118, 120) aufweist, wobei der wenigstens einen Aufnahme (34, 36; 184, 186) jeweils eine Komplementärhaltestruktur zugeordnet ist, die mit der Haltestruktur an dem wenigstens einen Befestigungsorgan (18, 20; 118, 120) zusammenwirkt.

2. Anordnung nach Anspruch 1,
**dadurch gekennzeichnet, dass** die Bremskraftunterstützungseinrichtung (10; 110) von einem Bremskrafterzeuger oder von einem Bremskraftverstärker gebildet ist.

3. Anordnung nach Anspruch 1 oder 2,
**dadurch gekennzeichnet, dass** die Adaptereinrichtung (22; 122) mit Befestigungsbohrungen (28; 128) zur motorraumseitigen Anbringung an einer Spritzwand des Kraftfahrzeugs ausgebildet ist.

4. Anordnung nach einem der vorangehenden Ansprüche,
**dadurch gekennzeichnet, dass** die Adaptereinrichtung (22; 122) einen Aufnahmekanal (32; 132) zur Aufnahme eines Betätigungseingangsabschnitts (14; 114) der Bremskraftunterstützungseinrichtung (10; 110) aufweist.

5. Anordnung nach Anspruch 4,
**dadurch gekennzeichnet, dass** der Aufnahmekanal zum Aufnehmen eines Betätigungseingangsabschnitts (14; 114) und die Aufnahmeöffnung zum Aufnehmen des wenigstens einen Befestigungsorgans (18, 20; 118, 120) zusammenfallen.

6. Anordnung nach einem der vorangehenden Ansprüche,
**dadurch gekennzeichnet, dass** das wenigstens eine Befestigungsorgan (18, 20) von einem Profilbolzen gebildet ist, der an seinem freien Ende mit einer die Haltestruktur bildenden Durchmesserverengung (54) versehen ist, wobei die Adaptereinrichtung (22) mit jeweils einer in der Aufnahmeöffnung (34, 36) angebrachten und in die Durchmesserverengung (54) eingreifenden Rastfeder (38, 40) versehen ist.

7. Anordnung nach Anspruch 6,
**dadurch gekennzeichnet, dass** die Rastfeder (38, 40) in der dieser zugeordneten Aufnahme (34, 36) gegen eine Axialbewegung blockiert ist.

8. Anordnung nach Anspruch 6 oder 7,
**dadurch gekennzeichnet, dass** der Profilbolzen (46) mit einem Einführzapfen oder/und mit einer Spreizrampe (48) versehen ist.

9. Anordnung nach einem der vorangehenden Ansprüche,
**gekennzeichnet durch** ein, vorzugsweise elastisches, Pufferelement (60), das zwischen der Adaptereinrichtung (22) und der Bremskraftunterstützungseinrichtung (10) angeordnet ist.

10. Anordnung nach einem der Ansprüche 1 bis 4,
**dadurch gekennzeichnet, dass** das wenigstens eine Befestigungsorgan (118, 120) von einem Kopfbolzen gebildet ist, der an seinem freien Ende mit einem die Haltestruktur bildenden durchmesservergrößerten Rastkopf (166, 168) versehen ist, wobei die jeweils zugeordnete Aufnahme (176, 178) der Adaptereinrichtung (122) in Form einer Bajonettnut zum Aufnehmen und Verriegeln jeweils eines Kopfbolzens (118, 120) ausgebildet ist.

11. Anordnung nach Anspruch 10,
**dadurch gekennzeichnet, dass** die Bajonettnut zur Fixierung der Bremskraftunterstützungseinrichtung jeweils ein mit dem Kopfbolzen (118, 120) zusammenwirkendes Rampenprofil (188) aufweist, auf welches der Kopfbolzen (118, 120) beim Anbringen der Bremskraftunterstützungseinrichtung (110) an der Adaptereinrichtung (122) aufläuft.

12. Anordnung nach Anspruch 10 oder 11,
**gekennzeichnet durch** eine Anschlagfläche (192) an der Bajonettnut, welche eine vordefinierte Relativposition zwischen Bremskraftunterstützungseinrichtung (110) und Adaptereinrichtung (122) bereitstellt.

13. Anordnung nach einem der vorangehenden Ansprüche,
**dadurch gekennzeichnet, dass** das Befestigungsorgan als Schaftabschnitt ausgebildet ist, der von der Bremskraftunterstützungseinrichtung vorspringt, und dass die Adaptereinrichtung einen korrespondierende Gegenschaftabschnitt (230, 314) aufweist, der mit dem Schaftabschnitt koppelbar ist.

14. Anordnung nach Anspruch 13,
**dadurch gekennzeichnet, dass** der Schaftabschnitt (214) in den Gegenschaftabschnitt (230) einsteckbar ist, wobei der Schaftabschnitt (214) an seiner Außenumfangsfläche die Haltestruktur (220), insbesondere eine Bajonettverriegelungsformation, aufweist, und dass der Gegenschaftabschnitt (230) an seiner Innenumfangsfläche (232) die Komplementärhaltestruktur (234), insbesondere eine Komplementär-Bajonettverriegelungsformation, aufweist.

15. Anordnung nach Anspruch 13,
**dadurch gekennzeichnet, dass** der Gegenschaftabschnitt (314) in den Schaftabschnitt (330) einsteckbar ist, wobei der Gegenschaftabschnitt (314) an seiner Außenumfangsfläche die Haltestruktur (320), insbesondere eine Bajonettverriegelungsformation, aufweist, und dass der Schaftabschnitt (330) an seiner Innenumfangsfläche (332) die Komplementärhaltestruktur (334), insbesondere eine Komplementär-Bajonettverriegelungsformation, aufweist.

16. Anordnung nach einem der vorangehenden Ansprüche,
**dadurch gekennzeichnet, dass** das Befestigungsorgan, insbesondere der Schaftabschnitt nach Anspruch 13, an einem Koppelelement (210; 310) ausgebildet ist, das als gesondertes Bauteil oder als Baugruppe an der Bremskraftunterstützungseinrichtung anbringbar ist.

17. Anordnung nach einem der vorangehenden Ansprüche,
**dadurch gekennzeichnet, dass** an wenigstens einer Komponente von Adaptereinrichtung (122) und Bremskraftunterstützungseinrichtung (110) ein Fixierelement (194; 198; 200) zum Festlegen der Bremskraftunterstützungseinrichtung (110) an der Adaptereinrichtung (122) in der vordefinierten Relativposition vorgesehen ist.

18. Anordnung nach Anspruch 17,
**dadurch gekennzeichnet, dass** das Fixierelement (194) von einer Fixierschraube oder von einem Fixierstift gebildet ist.

19. Anordnung nach Anspruch 17,
**dadurch gekennzeichnet, dass** das Fixierelement (194) von einer reibungsintensiven Fläche gebildet ist, die mit einer korrespondierenden Gegenfläche an der jeweiligen anderen Komponente von Adaptereinrichtung (122) und Bremskraftunterstützungseinrichtung (110) zusammenwirkt.

20. Anordnung nach Anspruch 19,
**dadurch gekennzeichnet, dass** das Fixierelement (200) eine Lamellenformation aufweist, die mit einer Mehrzahl von Blockierlamellen (202) versehen ist, welche in einer Blockierrichtung mit einem Anstellwinkel (x) geneigt ausgerichtet sind.

21. Verfahren zum Anbringen einer Bremskraftunterstützungseinrichtung in einem Kraftfahrzeug, mit einer Anordnung nach einem der vorangehenden Ansprüche, umfassend die Schritte:
A) motorraumseitiges Anbringen der Adaptereinrichtung an dem Fahrzeugchassis,
B) Einführen des wenigstens einen Befestigungsorgans in die diesem zugeordnete Aufnahmeöffnung an der Adaptereinrichtung und
C) Fixieren der Bremskraftunterstützungseinrichtung an der Adaptereinrichtung durch In-Eingriff-bringen der Haltestruktur und der Komplementärhaltestruktur.
